# EUROPEAN PATENT APPLICATION

(11) **EP 2 479 973 A1**
(43) Date of publication of application: **25.07.2012**
(21) Application number: 09849402.4
(22) Date of filing: 18.09.2009
(51) Int. Cl.: H04M 17/00

(54) **METHOD AND SYSTEM FOR OPTIMIZING THE EFFICIENCY WITH WHICH TELECOMMUNICATION NETWORK RESOURCES ARE USED**

(71) Applicant: Ferro Morado, Francisco Manuel, 35640 Fuerteventura (Las Palmas) (ES)
(72) Inventor: Ferro Morado, Francisco Manuel, 35640 Fuerteventura (Las Palmas) (ES)
(74) Representative: Elzaburu Marquez, Alberto
(86) International application number: PCT/ES2009/070391
(87) International publication number: WO 2011/033144

(57) **Abstract**

Method, system and credit manager for optimizing the efficiency with which telecommunication network resources are used by managing, in real time, changes in user profiles according to whether certain variable conditions are complied with by the use of the telecommunication network resources by a user. Following the profile migration generated and monitored by the credit manager, the latter calculates the new level of network resources (services/contents) to be offered to the new user profile. In this manner, said automatic updating of the user profile optimizes the provider's resources by assigning new network capabilities (new usage time limits, new qualities of service or by establishing content access or capability limiters).

## Description

### FIELD OF THE INVENTION

The invention is related to the field of telecommunications services and, in particular, to the optimisation of the use of mobile telecommunication network bandwidth.

### STATE OF THE ART

One of the objectives of any telecommunications network operator (telecommunications service provider) is to optimise the use of the capacity available in its network infrastructure in order to maximise the use of that capacity.

In this regard, whenever a telecommunications service provider needs to prevent any user, identified by his/her user identifier, from accessing its network due to technical reasons or due to technical or contract breach by the user, the user no longer uses the bandwidth that the service provided allocated to that specific user.

In the particular case of mobile telephone service users and in order to block access to the network and, therefore, to the services it offers, whether for technical or contract-related reasons, the user's possible use of network resources generally supplied by the service provider, and the retention of that user in order for use of the service provider's network resources to continue, are considerably complex issues. Currently, the service provider does not unblock the user until the event which led to access to the services being blocked in resolved.

W02007120117 (A2) describes methods, systems, computer support and credit facilitators required to provide access to telecommunications services to users who fit a particular profile beyond a certain limit. This extension in the provision of service is determined by a series of criteria, so that the capacity of telecommunications networks is used by the largest possible number of users. This user's profile contemplates access to services in which use is determined and monitored in real time for each access.

However, the above methods and systems do not resolve the issue of optimising the provider's network infrastructure use for all the user profiles which may be included. In the event that certain service use and network occupancy parameters are not monitored in real time as described in the previous document, or in the event that a change of profile is requested on the basis of an outline condition or in other cases, the above methods do not offer the flexibility required to continue providing access to the service beyond a certain threshold for all user profiles.

The situation prior to application of this invention is the following:

### A. From the user's perspective:

1. user exceeds the time or content limit for access to the service provider's network resources, assigned to that user by the user's service provider
2. service provider blocks the user's access to telecommunications services
3. blocked user cannot access the network and frees up network capacities that could continue to be used
4. in order to regain access to similar telecommunication services, the user changes to another service provider and, therefore, another network, thus being unable to further use the original service provider's network capacities
5. user is subject to a series of aimed at restoring the original situation, initiated by the original service provider automatically, either with proprietary procedures and technology or assigning the resolution of these events to external companies with proprietary procedures and technology

### B. From the service provider's perspective:

1. user exceeds the limit to the use of the service or services or accesses in time or content to the service provider's network resources
2. service provider blocks the user's access to the network, thus freeing network capacities which are not used by the user and the additional potential use of the network that the user might have made is no longer optimised
3. service provider activates external follow-up and network use recovery mechanisms, using mechanisms which are both internal and external to the service provider's system
4. service provider relinquishes the provision of services to the user, which causes network capacities to be unused
5. service provider needs to deal with the occupancy of unused capacities by existing or new users

### DESCRIPTION OF THE INVENTION

The invention optimises the following aspects:

### A- Through this innovation, telecommunication service providers achieve two objectives:

1. optimising present and future use of their network's capacities, providing service to those users in a way that is controlled or monitored in real time, avoiding blockage to access and, thus, loss of users, retaining them as subscribers to the services provided and, therefore, providing continuity to the use of network resources by those users
2. providing a timely resolution with proprietary resources to the situation which led to blocking access to the service

### B- Likewise, telecommunication service users achieve two objectives through this innovation:

1. retention of access to their provider's telecommunication services without the need to give up their use in an abrupt manner. The new access mode is now conditioned and monitored and, therefore, the user profile is different from the one they had originally, prior to exceeding the network use limits
2. conservation of the user identifier for the system and for external telecommunication networks such as caller identification (for fixed telecommunication services) or IMSI (personal identifier for mobile services) and, consequently, avoiding the problems related to changing service providers
3. it provides users an easy transition to their new situation in relation to the service provider through a new user profile, without loss of network and its services

Although this invention focuses on mobile telecommunication services, its implementation is applicable to any telecommunication service in which different user profiles may co-exist.

Regarding mobile telephony services for users with limited supervision of consumption or use of services or contents, a possible situation is defined where access to network resources may be blocked, for instance, by the variance between the records of consumption of services used and the records of payments received for such consumption within a given period of time, according to previously established contract criterion. For a given period of time, the provider provides the user free access to the network resources, recording each use, compares the used capacities to the paid capacities recorded in a credit manager, and finds a difference due to the latter being lower.

Users react to network access being blocked in the following two ways:
A) the user is able to restore a certain temporary blockage to the services within a given period of time by matching these records through mechanisms previously established with the service provider (always through the restoration of the original situation a transaction by credit card, bank transfer or payment in cash at any establishment linked to the service provider)
B) the user takes no action and waits for the service provider to block access to the network resources and, therefore, to the services available until that time. The user normally decides to subscribe to another provider who can supply the same type of service or, otherwise, registering as a new user with the same provider under a different network access profile (for example, with a user profile which is monitored in real time, but for which the provider only knows the user's new IMSI)

The innovation presented in this document avoids any of the above reactions, managing, on one hand, to avoid lack of use of network capacities provided by the service provider, therefore, maintaining optimal efficiency in the use of resources, and, on the other hand, the problems faced by the user in relation to the lack of access to the network, change of user identifier and the possible loss of data in the user profile.

### Implementation of the invention

The invention consists in providing continuity in the use of the service provider's network resources through:
- automatic migration of the user's profile who uses certain telecommunication services whenever the variance in records indicated by the credit manager is detected
- limitation and supervision of the user's access to certain services, which is now possible under new conditions

This mechanism is based on automatic updating of the user profile, produced by meeting a condition which is stored in the credit manager, through which the credit manager requests from the service provider's Local User Database (Home Location Register) / Authentication Centre (HLR/AUC) that a certain user, identified by the IMSI (international Mobile Subscriber Identity) user identifier, stored in the user's USIM (Universal Subscriber Identity Module) for UMTS or 3G networks, or SIM (Subscriber Identity Module), in the case of 2G or 2.5G telecommunication networks), be assigned a different classification for access to the network and its resources from the classification the user had before meeting the condition mentioned above.

The method to assess compliance with the condition which leads to the change of user profile is carried out in the credit manager. Once the profile migration has been initiated and supervised by the credit manager, it calculates the new level of service/contents which are to be supplied to the new user profile. In this way, this automatic update of the user profile optimises the provider's resources, assigning a new bandwidth, new temporary limitations of use, new qualities of service, or setting limits to capacity or access to contents.

The new user access profile can be modified, depending on the user's behaviour in relation to payments and consumption.

In particular, the invention is described for the case in which the condition of having exceeded the network use or consumption limit, as defined in the contract, is such that the user no longer complies with (defaults on) the obligation to compensate the record of mobile telecommunications services used within the period of time agreed with the service provider, thus no longer matching that record and, therefore, not compensating the user's consumption economically through his/her payments. The above condition is detected by the credit manager, which triggers the migration mechanism for the user.

Subsequently, as a first effect, once the user's default on the contract has been detected by the credit manager, the credit manager requests the HLR/AC to change the user's profile from the original service profile (for example, a profile in which the consumption-compensation variance is monitored once a month, which is characteristic in post-paid systems) to a profile under which the consumption of services (which are limited with respect to the previous profile) is monitored in real time (which is characteristic in pre-paid systems).

Following the request for HLR/AC to activate the new user profile, the user is requested to confirm his/her new profile, thereby accepting his/her new condition of access to and use of services and contents to be monitored in real time (an temporarily limited features). The user's action consists in matching the variance between the credit manager's two records (consumption and compensation) through an increase in the compensations record by one of the methods authorised by the service provider, such as financial institutions' teller machines, on-line credit payments, or at any establishment where mobile telephone cards are sold. In this way the user's profile is migrated under the control of the user, through an initial reduction in the difference between both records.

Following activation of the new user profile by the user, the next step is taken by the credit manager, which withholds part of the amount transferred by the user, either as agree at the time that the new profile was accepted or at the time that the initial contract as signed. The amount withheld may be proportional to the variance:
- a percentage (for example, 35%) of the total amount transferred by the user in question
- a fixed amount
- or even a variable amount, depending on the initial variance

The amount withheld is recorded by the credit manager and shall be assigned to compensate the variance that the user may have at any time, and the new variance (remaining variance) shall be updated accordingly in the control manager's variance register. The service provider informs the user about the result of this operation by message addressed to user's IMSI, for example by one or several short text (Short Message Service/SMS) or multimedia messages (Multimedia Message Service/MMS), through one or several email messages, or using whatever channel the user may have selected, indicating the authorisation to continue having limited access to the network services along with information relating to:
- the amount withheld
- and/or the remaining variance
- and the new amount available for subsequent use of the services (future use register)
- optional: commissions on arrears
- optional: explanation of whether there are any limitations in the new use of the network and their explanation

Following confirmation through compensation (reduction of the variance) by the user, the credit manager informs the service provider's HLR/AC that it is again possible for the user to access the network and services under the conditions set by the provider. Access to this service will be monitored by the credit manager in real time and the new maximum amount of access to network resources will be equal to the amount stored in the credit manager's future use register (according to the example above, 65% of the amount transferred by the user), according to the procedure described in the claims in relation to the credit manager.

The user may again begin to use the networks capacities, which had been blocked by the service provider, using the services in the way (limitations and/or restrictions to access to contents, speed, time, quality) that the service provider specifies.

The above procedure will be applied to as many user iterations as required for the user to restore the value of the remaining variance to an amount equal to or less than zero, thus having repaid the variance.

During these iterations, the user will continue to use the bandwidth required by the limited and monitored use of the services. In this way, users who, for the reasons abode, would otherwise have caused a reduction in the use of network resources and, consequently, in its efficiency, are kept active.

In the event that, after successive iterations of the user by the provider through the credit manager, the remaining variance is cancelled or becomes negative, the credit manager informs the service provider's HLR/AC about this event. The HLR/AC will automatically migrate the user from the current, monitored and limited access profile to the provider's standard profile.

The provider will inform the user about the amount by which the remaining variance has been exceeded with the latest payment made by the user, and may inform the user about how the excess amount shall be transferred to the user. One example may be to credit this excess amount from the next invoice the user receives for services used during the next invoice period. The service provider performs this notification to the user by a message addressed to the user's IMSI identifier, such as short or multimedia message (SMS or MMS) or by email or any other means selected by the user.

Furthermore, the credit manager may be programmed to withhold an additional amount, for example a percentage of the remaining variance (such as 7%) as commission on arrears. These amounts will be calculated and recorded in the credit manager.

Finally, the service provider may decide which remaining variances will be treated in a special way, or even not automatically, so that those users shall follow another procedure for the resolution of the remaining variance with different procedures and attention.

Summarising the Situation prior to application of this invention in a diagram:

### • From the user's perspective:

1. user default situation
2. blockage of the user's access to the telecommunication services by the service provider. The user no longer occupies the network. The provider loses efficiency in the management of the network's capacities
3. the user changes service provider
4. the user loses his/her IMSI

### • From the service provider's perspective:

1. user default situation
2. blockage of the user's access to services with consequent loss of efficiency in network use and economic losses related to the remaining variance. Expenses related to the attempt to restore the initial status with own or external resources
3. cancellation of the user

New Situation with the application of this invention:

### • From the user's perspective:

1. user default situation
   -> Introduction of the invention
2. user partially reduces the remaining variance. User continues to use the provider's network resources
3. user does not suffer blocked access to the network and to services (now monitored/limited by the service provider)
4. user cancels the remaining variance on a pro rata basis through one or several iterations of the system: user continues with the service provider
5. user retains his/her subscriber number (IMSI) determined by the relevant SIM

1. the user automatically returns to the original status once the credit manager detects that the variance amount is equal to or less than zero

### • From the service provider's perspective:

2. user default situation
   -> Introduction of the proposed invention
3. continuity of service subject to reduction of the variance
6. continuity in network resource occupancy, such as the contracted services or bandwidth: recovery of the remaining variance on a pro rata basis and continuity of invoicing, generating new income
4. monitoring of remaining variance in real time
5. the user remains subscribed to the service provider, which implies assurance and optimisation of network resource use. The service does not need to activate the usual internal or external resources for variance recovery
6. the provider automatically migrates the user to the original status once the credit manager detects that the variance amount is equal to or less than zero

### Description of Figures

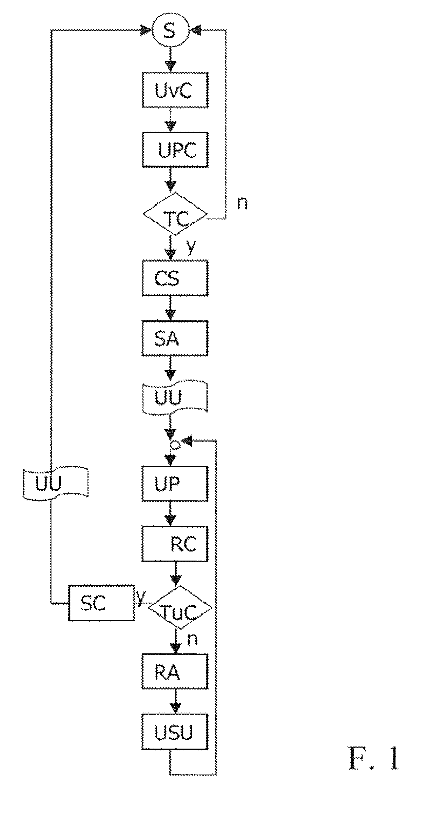

*Figure 1* (F.I) represents the flow chart which shows migration of the user profile from the event where the user initiates an infringing activity against the service provider until the initial situation is restored

S- Initial situation: User with a profile where the consumption-compensation variance is monitored once for each time period determined by the service provider (for example, once a month), characteristic of system which use a final invoice, or post-paid, where there is no infringement for exceeding any limits under the contract with the service provider

UPC- Verification of the user's consumption-compensation ratio ("-" is the arithmetic subtraction operation). The compensation is the amount paid by the user to the service provider in a period of time which is set by the service provider

TC- Threshold Check (Threshold = consumption-compensation): Threshold exceeded (Threshold > 0)?

n- No

y- Yes

CS- UvC: User exceeds limits and incurs variance

Change of user profile: migration from profile in which the consumption-compensation variance is monitored once for every period set by the service provider (for example, monthly; with invoice at the end or post-paid) to a profile where the consumption-compensation ratio is monitored in real time (prior compensation, Pre-paid)

Update of the local user database (HLR/AC)

SA- Adjustment of the service provided to the user (type of service, duration, quantity, etc) to the new conditions of access to the service

UU- Notification to the user about the update to the new condition

UP- Compensation (recharge) by the user

Record of the recharge by the credit manager

RC- Calculation of the amount withheld by the provider

Optional: Calculation of the agreed amount to be withheld as commission

Calculation of the remaining variance

Calculation of the amount allocated for future use

TuC- Check whether the latest amount withheld covers the remaining variance: remaining variance less than or equal to 0?

RA- Accumulation of the amount withheld (excluding commission)

SC- Automatic change of the user's status: from profile where the consumption-compensation ratio is monitored in real time (pre-paid compensations, Pre-payment) to profile where this ratio is calculated once for every period of time (for example, with invoice at the end or post-paid)

S se of the service by the user under the new conditions set by the service provider

Real time control by the credit manager of the user's behaviour in relation to consumption

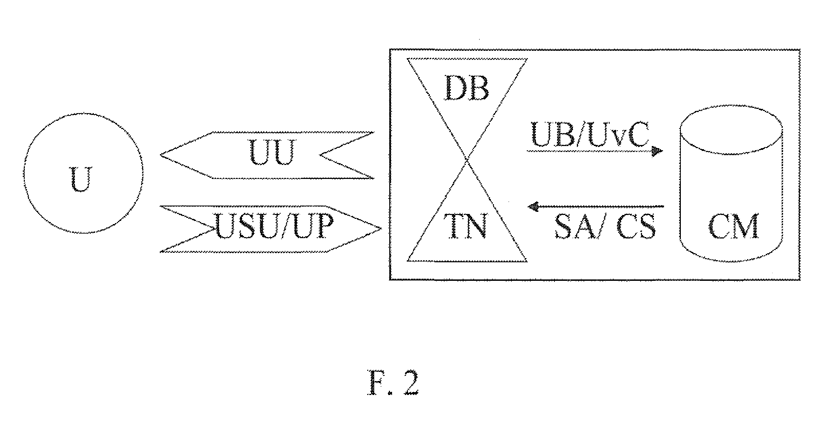

*Figure 2* (F.2) represents the information exchanged between the different elements of the service provider's system, the credit manager and the user terminal (some exchanges of information between the parts of the system correspond to the abbreviations shown in F.I)

U- User identifier

USU- The user's use of the service, along with the user's identification

UP- User recharge, along with the user's identification

DB- Service provider's local telecommunication network (TN) user database

TN- Service provider's telecommunication network

CM- Real time credit manager

CS- User profile update request

UU- Update information to the user regarding the new profile

UB - Information regarding the user's behaviour in relation to the use of the service, including information regarding possible variances from previously set conditions (UvC), user recharges (UP) and information regarding the user's consumption of service (use)

SA- Adjustment of the service provided to the user (type of service, duration, quantity, etc) to the new conditions of access to the service

## Claims

1. Method for optimising the efficiency with which telecommunication network resources are used
**characterised in that** the method includes a stage at which a credit manager detects whether the user exceeds a limit, triggering a change **in that** user's assigned capacity to occupy network resources.

2. Method according to claim 1
**characterised in that** the method includes a stage where the consumption values and compensations are calculated and managed in real time by a credit manager, as are each user's specific remaining variance values.

3. Method according to any of the previous claims
**characterised in that** the method includes a stage where the user resource assignment is changed from the profile in which the consumption-compensation variance is monitored only once for each time unit determined by the service provider to a profile in which the consumption-compensation variance is monitored in real time.

4. Method according to any of the previous claims
**characterised in that** the method includes a stage where the network resource occupancy capacity available to a user are adjusted through new conditions of access to the user's service.

5. Method according to any of the previous claims
**characterised in that** the method includes a stage at which a change of resource assignment is triggered due to a positive (payment default) consumption-compensation variance by a user for the services consumed which were supplied by the user's service provider.

6. Method according to any of the previous claims
**characterised in that** the method includes a stage at which the variance values are changed from which resource assignment activations are generated prior to the start of the new provision of service to the user.

7. Method according to any of the previous claims
**characterised in that** the method includes a stage at which the deduction is calculated and applied by the service provider to the compensation amount paid by the user.

8. Method according to any of the previous claims
**characterised in that** the method includes a stage at which the user is informed of the amount allocated to future uses.

9. Method according to any of the previous claims
**characterised in that** the method includes a stage at which the last deduction applied by the provider is checked to find out if it covers the remaining variance.

10. Method according to any of the previous claims
**characterised in that** the method includes a stage at which the user is automatically migrated to the original state once the credit manager has detected that the variance amount is equal to or less than zero.

11. Method according to any of the previous claims
**characterised in that** the method is applied to general mobile telephone services, such as those based on cellular networks, wireless networks or satellite networks.

12. Method according to any of the previous claims
**characterised in that** the method includes a stage at which the user is informed using one or several short messages (SMS), multimedia messages (mums) or email messages.

13. System for optimising the efficiency with which telecommunication network resources are used
**characterised in that** it includes at least one telecommunications network, a credit manager and a user who has access to the network's resources through a terminal in which the credit manager detects that a maximum amount has been exceeded by the user, triggering a change in the assignment of that user's capability to use network resources.

14. Credit manager for optimising the efficiency with which telecommunication network resources are used
**characterised in that** it detects that a maximum amount has been exceeded by the user, triggering a change in the assignment of that user's capability to use network resources.

15. Credit manager for optimising the efficiency with which telecommunication network resources are used
**characterised in that** it calculates and assigns an amount to match the difference between the variance and the compensation amount paid by the user.

16. Computerised means of recording and storing data for the optimisation of the efficiency with which telecommunication network resources are used
**characterised in that** it includes a specific computer program which at least executes the detection of a maximum amount being exceeded by the user in real time, triggering a change **in that** user's capability to use network resources.
